# FASCICULE DE BREVET EUROPEEN

(11) **EP 1 831 123 B1**
(45) Date de publication et mention de la délivrance du brevet: **03.07.2013**
(21) Numéro de dépôt: 05810616.2
(22) Date de dépôt: 10.10.2005
(51) Int. Cl.: C03C 17/00, C03C 17/34

(54) **PROCEDE DE DEPOT SUR UN VERRE SODOCALCIQUE COMPRENANT UNE ETAPE DE FLUORATION PREALABLE**
VERFAHREN ZUR ABSCHEIDUNG AUF NATRONKALKGLAS MIT VORFLUORIERUNGSSTUFE
METHOD FOR DEPOSING ON SODA-LIME GLASS COMPRISING A PRE-FLUORINATION STAGE

(30) Priorité: 11.10.2004 FR 0452337
(43) Date de publication de la demande: 12.09.2007
(73) Titulaire: SGD S.A., 92800 Puteaux (FR)
(72) Inventeur: FOSSE, Lucien, F-76260 ETALONDES (FR); RICOUARD, Bertrand, F-80880 SAINT QUENTIN LAMOTTE LA CROIX AU BAILLY (FR)
(74) Mandataire: Lucas, Francois
(86) Numéro de dépôt international: PCT/FR2005/050836
(87) Numéro de publication internationale: WO 2006/040495

(56) Documents cités:
- EP-A- 0 400 796
- WO-A-01/09051
- FR-A- 2 617 833
- US-A- 4 232 065
- US-A- 4 324 601
- US-A- 4 721 632
- US-A- 5 165 960

## Description

L'invention concerne un procédé de traitement, par exemple de traitement interne d'emballages verriers tels que des pots ou des flacons utilisés typiquement en parfumerie ou en cosmétique, ledit traitement ayant pour finalité le dépôt sensiblement uniforme d'au moins une couche d'un matériau à des fins de revêtement, de décor ou pour conditionner des produits chimiquement sensibles. Dans la suite de la description, on emploiera pour illustrer l'invention indifféremment les termes d'emballage, de récipient ou de flacon sans que cela puisse être considéré comme restrictif du domaine de l'invention.

Il est connu que les verres sodocalciques communément utilisés comme récipients ou autres produits verriers se corrodent lors d'un contact avec certaines solutions liquides telles que des solutions aqueuses contenues dans le récipient. Ainsi lors d'un contact avec l'eau, les ions alcalins et alcalino-terreux contenus dans le verre tels que Na⁺, K⁺, Ca²⁺ ont tendance à passer en solution tandis que les protons de la solution diffusent à l'inverse dans la paroi de verre. Le passage de ces ions en solution peut notamment poser problème lorsque le produit verrier est utilisé à des fins pharmaceutiques, d'une part en raison de la présence de ces cations eux-mêmes en solution et d'autre part parce que le contenu liquide du flacon a tendance à s'alcaliniser.
De façon à mesurer la résistance à l'hydrolyse des récipients, souvent appelé attaquabilité à l'eau dans le domaine, il est ainsi courant d'effectuer un traitement hydrothermal à 121 °C dans un autoclave à 0,2 MPa pendant une heure.
En fonction du volume du flacon et de la quantité d'acide nécessaire à la neutralisation des OH⁻ présents ensuite en solution, on définit des récipients à usage pharmaceutique de différents types. Par exemple, pour un flacon de contenance égale à 500 ml, on définit des flacons à usage pharmaceutique :
- de type III lorsque la valeur limite d'acide pour neutraliser l'ensemble des ions OH⁻ en solution est de 2 ml d'HCl N/100 pour 100 ml de solution,
- de type II lorsque cette valeur limite d'acide est de 0,2 ml d'HCl N/100 pour 100 ml de solution.

Pour améliorer la résistance à l'hydrolyse des emballages verriers à usage pharmaceutique tels que des pots ou des flacons, plusieurs méthodes de traitement interne par attaque acide ont été proposées :
- traitement de la surface interne du flacon avec H₂O sous forme vapeur et SO₃ gaz, les deux gaz étant injectés successivement dans le flacon à chaud (600°C), ledit traitement menant à l'extraction des ions Na⁺, K⁺, Ca²⁺ etc., par attaque acide du verre pour produire en surface des sulfates d'alcalin et d'alcalinoterreux éliminés ensuite par lavage aqueux, avec apparition finalement d'une couche de surface déalcalinisée (épaisseur d'environ 0,2 mm) formant une couche protectrice contre la corrosion.
- traitement à chaud au sulfate d'ammonium (NH₄)₂SO₄ sous forme de poudre et en présence de vapeur d'eau, avec décomposition en vapeur acide, selon le même principe d'attaque acide que précédemment.

Selon une méthode différente, un composé fluoré, de préférence un gaz tel que le 1,1 difluoroéthane est utilisé pour le traitement de la surface interne du flacon. Un tel procédé de traitement est par exemple décrit dans les brevets US 3,314,772 ou US 3,709,672. Selon ces publications, l'effet de protection anticorrosion obtenu après traitement peut être attribué à un échange ionique des groupements OH⁻ ou O²⁻ surfaciques par des ions F⁻, cet échange étant à l'origine de l'empêchement des échanges ioniques ultérieurs entre la paroi du flacon et la solution contenue dans le récipient. On pourra par exemple se référer à ces publications pour choisir les composés fluorés ou optimiser les conditions de l'étape de fluoration selon l'invention.
Le traitement est par exemple effectué à chaud (typiquement entre 400 et 700°C) dans le flacon nouvellement formé avec décomposition du gaz, éventuellement en présence d'air, avec libération de fluor naissant qui réagit avec le verre en surface. La quantité de DFE est en général contrôlée, sinon on observe à la surface intérieure du flacon des zones plus ou moins dégradées suite à l'attaque fluoridrique.

On a maintenant découvert qu'un tel traitement pouvait avoir d'autres buts et avantages et notamment pouvait être utile à des fins très différentes sur des verres autres que ceux utilisés à des fins pharmaceutiques, en particulier pour des emballages verriers plus conventionnels tels que les verres sodocalciques utilisés dans les domaines de la parfumerie et de la cosmétique. Ces verres sont par exemple des verres transparents, des verres colorés, des verres opales se présentant sous diverses formes de flacons ou de pots.

En effet, les expériences effectuées par le demandeur ont montré que le dépôt d'un revêtement interne sous forme d'une ou plusieurs couches internes successives dans les verres sodo-calciques était très difficilement réalisable sans qu'un phénomène de délamination ou de décollement local de la ou des couches successives apparaisse. Dans tous les cas, des développements anarchiques et /ou des défauts ponctuels apparaissent au sein de la ou desdites couches. Une solution possible pour résoudre ce problème est d'utiliser un verre frais, c'est à dire déposer les couches dans les heures qui suivent le formage du verre ou de stocker les flacons dans des conditions d'hygrométrie contrôlées avant le traitement. On conçoit que cette solution ne permet cependant pas une flexibilité suffisante du procédé, pris dans sa globalité.
Une autre solution possible est d'utiliser des verres borosilicatés incluant une préparation spécifique des flacons avant le dépôt consistant par exemple en des lavages successifs de la surface intérieure du flacon.
Cette solution n'est pas non plus satisfaisante car elle oblige à changer la nature du verre et entraîne un surcoût non négligeable du produit final.

On a maintenant découvert qu'une étape préalable de traitement de la surface du verre par fluoration, c'est à dire par mise en contact avec un composé fluoré, permettait de façon surprenante de préparer la surface interne des récipients et de favoriser ainsi le dépôt ultérieur d'au moins une couche d'un ou plusieurs matériaux de revêtement interne. Sans que cela puisse être lié à ou interprété comme une quelconque théorie, il est possible que le traitement au DFE permette avantageusement et de manière surprenante la prévention de la formation de sulfate ou de carbonate d'alcalin ou d'alcalino-terreux à la surface de la paroi du flacon qui seraient ensuite autant de défauts empêchant la formation et l'adhésion de la couche de revêtement sur ladite paroi.

Selon l'invention et sans que cela y soit limité, le revêtement intérieur peut par exemple avoir pour finalité des effets de décor, de coloration, etc.
On a maintenant découvert que le traitement préparatoire selon l'invention facilitait la mise en oeuvre, sur des verres sodocalciques, des procédés de revêtement par le procédé PICVD (plasma impulse chemical vapour deposition) tel que cela est décrit dans les demandes de brevet WO 031014412 ou son équivalent US 2004/0247948 ou encore FR 2773796 ou son équivalent US 6,200,658. Le couches successives déposées amenant à un effet nacré du flacon sont des couches fines successives de SiOₓ et TiO_{y}. Le brevet US 65 37 626 décrit le dépot de couches SiO₂/TiO₂ sur des flacons de verre.

Dans sa forme la plus générale, la présente invention se rapporte à un procédé de traitement surfacique d'un verre sodo-calcique selon la revendication 1.

Par exemple, ladite surface est la surface interne d'un flacon ou d'un pot. Selon l'invention, le verre peut être à usage non pharmaceutique.

La fluoration est effectuée par décomposition d'un composé sous forme gazeuse à la pression et à la température ambiante et contenant du fluor, avantageusement le 1,1 difluoroéthane.

La fluoration est effectuée entre 400°C et la température de déformation du verre. En particulier, la température de fluoration peut être comprise entre 400 et 700°C, de préférence entre 500 et 650°C.

La fluoration est effectuée en présence d'une quantité d'air comprise entre 0% et 99% d'air en volume, de préférence entre 70 et 95 % d'air et de manière très préférée entre 85 et 95 % d'air.

L'étape de dépôt est mise en oeuvre par dépôt gazeux sous rayonnement plasma PICVD (plasma impulse chemical vapour déposition) pour le dépôt de couches fines successives SiOx et TiOy.

L'invention concerne également un produit verrier obtenu par la mise en oeuvre dudit procédé.

Ledit produit verrier peut être selon l'invention en verre transparent, en verre coloré ou en verre opale sous la forme d'un flacon ou d'un pot.

Enfin, l'invention concerne l'utilisation du produit verrier obtenu selon le précédent procédé dans les domaines de l'emballage pour la parfumerie ou la cosmétique.

L'invention sera mieux comprise à la lecture des exemples non limitatifs 1 et 2 qui suivent, donnés uniquement à titre illustratif.

### Exemple 1 (comparatif) :

On forme un flacon en verre sodocalcique de 50 ml de composition (en poids) 72% SiO₂ ; 13,5% LiO₂, 10,5% CaO et 2,4% Al₂O₃.

Le flacon en verre est ensuite entreposé une semaine en entrepôt. Il subit ensuite un traitement PICVD tel que décrit dans la demande WO 03/014415 ou son équivalent US 2004/0247948. Ce traitement permet le dépôt de couches successives de SiOₓ et TiOₓ. Le dispositif utilisé est similaire à celui décrit sur la figure 1 de cette publication. Les conditions expérimentales pour le dépôt des couches successives SiOₓ et TiO_{y} sont identiques à celles décrites dans l'exemple 9 de cette demande, mais sont appliquées en variante pour le dépôt sur le flacon en verre précédemment décrit, selon les principes de mise en oeuvre décrits en relation avec la figure 1.

Une observation visuelle immédiatement après le traitement montre que la partie interne du flacon présente des zones sans irisation c'est à dire au niveau desquelles tout ou partie des couches successives se sont décollées de la surface du verre.

Le flacon est ensuite rempli d'eau bouillante pendant 10 minutes. Après refroidissement, on observe que le flacon présente des zones sans irisation au niveau desquelles les couches se décollent de la surface du verre. On remarque visuellement également que des paillettes du matériau déposé en couche sont présentes dans le volume d'eau à l'intérieur des flacons.

### Exemple 2 (selon l'invention) :

On reprend les étapes de l'exemple 1 dans les mêmes conditions avec pour différence que la surface interne du flacon de l'exemple 1 est soumise, préalablement au dépôt des couches successives de SiOₓ et TiOₓ, à une étape supplémentaire de fluoration en présence de 1,1 difluoroéthane et d'air, à une température de 620°C. L'étape de fluoration est mise en oeuvre sur les parois internes du flacon, avant le dépôt des couches de revêtement.
Le mélange est constitué d'un volume de 1,1 difluroéthane pour 15 volumes d'air, le débit total des gaz étant de 450 litres par heure.
Après dépôt, on observe que les couches sont cette fois ci réparties linéairement, sans défauts ni décollement de la surface du verre et que le flacon présente un aspect irisé homogène.

L'aspect du flacon n'est pas modifié après le test à l'eau bouillante décrit précédemment et on n'observe pas après celui-ci de paillettes du matériau déposé en couche dans le volume d'eau présent à l'intérieur des flacons.

## Revendications

1. Procédé de traitement surfacique d'un verre sodocalcique **caractérisé en ce qu'**il comprend au moins:
- une étape de fluoration de ladite surface, effectuée par décomposition d'un composé sous forme gazeuse à la pression et à la température ambiante et contenant du fluor, entre 400°C et la température de déformation du verre et en présence d'une quantité d'air comprise entre 0% et 99% d'air en volume
- une étape de dépôt gazeux sous rayonnement plasma PICVD de couches fines successives SiOₓ et TiO_{y}, à usage de revêtement, de décor.

2. Procédé selon la revendication 1 dans lequel ladite surface est la surface interne d'un flacon ou d'un pot.

3. Procédé selon la revendication 1 ou 2 dans lequel le verre est à usage non pharmaceutique.

4. Procédé selon la revendication 4 dans lequel ledit composé gazeux est le 1,1 difluoroéthane.

5. Produit verrier obtenu par la mise en oeuvre du procédé selon l'une des revendications 1 à 4.

6. Produit verrier selon la revendication 5, en verre transparent, en verre coloré ou en verre opale tel qu'un flacon ou un pot.

7. Utilisation du produit verrier selon l'une des revendications 5 ou 6 dans les domaines de l'emballage pour la parfumerie ou la cosmétique.

## Patentansprüche

1. Verfahren zur Oberflächenbehandlung eines Kalknatronglases, **dadurch gekennzeichnet, dass** es wenigstens umfasst:
- einen Schritt zum Fluorieren der Oberfläche, der durch Zerlegen einer bei Umgebungsdruck und -temperatur gasförmigen und fluorhaltigen Verbindung zwischen 400 °C und der Verformungstemperatur des Glases sowie in Gegenwart einer Luftmenge zwischen 0 und 99 Vol.-% Luft durchgeführt wird,
- einen Schritt zur Gasphasenabscheidung unter Plasmastrahlung PICVD von aufeinander folgenden feinen Schichten SiOₓ und TiOy zur Verwendung als Beschichtung, Dekor.

2. Verfahren nach Anspruch 1, wobei die Oberfläche die Innenfläche eines Flacons oder eines Tiegels ist.

3. Verfahren nach Anspruch 1 oder 2, wobei das Glas für den nicht pharmazeutischen Gebrauch ist.

4. Verfahren nach Anspruch 1, wobei die gasförmige Verbindung 1,1-Difluorethan ist.

5. Glasprodukt, das durch Durchführen des Verfahrens nach einem der Ansprüche 1 bis 4 erhalten wird.

6. Glasprodukt nach Anspruch 5, aus transparentem Glas, aus farbigem Glas oder aus Opalglas, wie ein Flacon oder ein Tiegel.

7. Verwendung des Glasprodukts nach einem der Ansprüche 5 oder 6, auf den Gebieten der Verpackung für Parfümerie oder Kosmetik.

## Claims

1. Process for treating the surface of soda-lime glass, **characterized in that** it comprises at least:
- a step of fluorinating said surface, achieved by decomposing a compound which is a gas at room temperature and pressure and which contains fluorine, at between 400°C and the deformation temperature of the glass and in the presence of an amount of air between 0% and 99% air by volume; and
- a step of gas-phase deposition, under PICVD plasma stimulation, of successive thin SiOₓ and TiO_{y} films for use as decorative coatings.

2. Process according to Claim 1, in which said surface is the internal surface of a flask or a pot.

3. Process according to either of Claims 1 and 2, in which the glass has a non-pharmaceutical use.

4. Process according to Claim 4, in which said gaseous compound is 1,1-difluoroethane.

5. Glass product obtained by implementing the process according to one of Claims 1 to 4.

6. Glass product according to Claim 5, made of transparent glass, made of coloured glass, or made of milk glass, such as a flask or a pot.

7. Use of the glass product according to either of Claims 5 and 6 in the fields of packaging for perfumes or cosmetics.
